# EUROPEAN PATENT APPLICATION

(11) **EP 4 826 950 A1**
(43) Date of publication of application: **21.10.2026**
(21) Application number: 23961450.6
(22) Date of filing: 13.12.2023
(51) Int. Cl.: H02J 7/00, H01M 10/42

(54) **BATTERY PACK PROVIDING DEVICE, CONTROL METHOD, AND PROGRAM**

(71) Applicant: Japan Tobacco Inc., Tokyo 105-6927 (JP)
(72) Inventor: YAMADA, Manabu, Tokyo 130-8603 (JP); SENJU, Masatoshi, Tokyo 130-8603 (JP); KAWASAKI, Reijiro, Tokyo 130-8603 (JP); SERITA, Kazutoshi, Tokyo 130-8603 (JP)
(74) Representative: Hoffmann Eitle
(86) International application number: PCT/JP2023/044694
(87) International publication number: WO 2025/126384

(57) **Abstract**

[Problem] To provide an arrangement enabling suitable management of battery packs.

[Solution] A battery pack provision device for replaceably providing a battery pack to each of a plurality of inhalation devices having a heating unit for heating an aerosol source to generate an aerosol, a battery pack being detachably connected to each inhalation device, and the battery pack provision device comprising: a connecting portion electrically connected to the battery pack; and a control unit for determining a state of the battery pack based on information acquired, via the connecting portion, from the battery pack connected to the connecting portion, wherein, when it has been determined that the battery pack has deteriorated, the control unit controls processing to notify information indicating that the battery pack has deteriorated, in association with the battery pack.

## Description

### TECHNICAL FIELD

The present disclosure relates to a battery pack provision device, a control method, and a program.

### BACKGROUND ART

Inhalation devices that generate substances to be inhaled by a user are in widespread use. For example, an inhalation device employs an aerosol source for generating an aerosol, and a substrate including a flavor source or the like for imparting a flavor component to the generated aerosol, to generate an aerosol to which the flavor component has been imparted. The user can enjoy the flavor by inhaling the aerosol to which the flavor component has been imparted, generated by the inhalation device. The action by which the user inhales the aerosol will also be referred to below as "puffing" or a "puffing action". Examples of devices classified as inhalation devices that may be cited include those used in place of cigarettes, such as heated tobacco and electronic cigarettes, and also nebulizers, etc. used for medical purposes. It should be noted that heated tobacco is an inhalation device of the type which generates an aerosol by heating an aerosol source. An electronic cigarette is an inhalation device of the type which generates an aerosol by atomizing a liquid aerosol source.

Laws and regulations relating to the right to repair have been established in recent years. Laws and regulations relating to the right to repair refer to various laws and regulations which aim to provide an environment in which end-users are able to repair industrial products, and thus make use of those products for longer, from the viewpoint of consumer protection and environmental protection. The right to repair allows products which have been broken or damaged in use to be repaired. As a result, consumers can delay buying new products and therefore save money. The environmental burden can also be lessened because it is possible to reduce waste, and use of resources. The right to repair is thus an important aspect in promoting a circular economy because it benefits both consumers and the environment.

PTL 1 indicated below discloses an inhalation device with a replaceable battery pack, as technology relating to the right to repair.

### CITATION LIST

### PATENT LITERATURE

PTL 1: WO 2014/163664 A1

### SUMMARY OF INVENTION

### PROBLEM TO BE SOLVED BY THE INVENTION

The technology disclosed in PTL 1 above has only recently been developed, and there is still room for improvement in various aspects.

Accordingly, the present disclosure was devised in light of the problem above, and the objective of the present disclosure lies in providing an arrangement enabling suitable management of battery packs.

### SOLUTION TO PROBLEM

In order to solve the problem above, one aspect of the present disclosure provides a battery pack provision device for replaceably providing a battery pack to each of a plurality of inhalation devices having a heating unit for heating an aerosol source to generate an aerosol, a battery pack being detachably connected to each inhalation device, and the battery pack provision device comprising: a connecting portion electrically connected to the battery pack; and a control unit for determining a state of the battery pack based on information acquired, via the connecting portion, from the battery pack connected to the connecting portion, wherein, when it has been determined that the battery pack has deteriorated, the control unit controls processing to notify information indicating that the battery pack has deteriorated, in association with the battery pack.

The battery pack may comprise a memory unit for storing information indicating an operating history of the battery pack, and the control unit may determine the state of the battery pack based on the information indicating the operating history of the battery pack stored in the memory unit of the battery pack.

The information indicating the operating history of the battery pack may comprise at least either one of information indicating a discharge history of the battery pack and information indicating a charging history of the battery pack.

The memory unit of the battery pack may store specification information of the battery pack, and the control unit may determine the state of the battery pack also based on the specification information of the battery pack stored in the memory unit of the battery pack.

When it has been determined that the battery pack is faulty, the control unit may control processing to notify information indicating that the battery pack is faulty, in association with the battery pack.

The battery pack provision device may further comprise a charging unit for charging the battery pack connected to the connecting portion.

When a charging abnormality has occurred in the battery pack, the control unit may control processing to notify information indicating that a charging abnormality has occurred, in association with the battery pack.

The battery pack provision device may further comprise an output unit for outputting the information indicating the state of the battery pack determined by means of the control unit.

The battery pack provision device may comprise a plurality of connecting portions.

Furthermore, in order to solve the problem above, another aspect of the present disclosure provides a control method implemented by a processor for controlling a battery pack provision device for replaceably providing a battery pack to each of a plurality of inhalation devices having a heating unit for heating an aerosol source to generate an aerosol, a battery pack being detachably connected to each inhalation device, and the control method comprising: determining a state of the battery pack in the battery pack provision device based on information acquired, via a connecting portion electrically connected to the battery pack, from the battery pack connected to the connecting portion; and, when it has been determined that the battery pack has deteriorated, controlling processing to notify information indicating that the battery pack has deteriorated, in association with the battery pack.

Furthermore, in order to solve the problem above, another aspect of the present disclosure provides a program for causing a computer that controls a battery pack provision device for replaceably providing a battery pack to each of a plurality of inhalation devices having a heating unit for heating an aerosol source to generate an aerosol, a battery pack being detachably connected to each inhalation device, to function as a control unit for determining a state of the battery pack in the battery pack provision device based on information acquired, via a connecting portion electrically connected to the battery pack, from the battery pack connected to the connecting portion, wherein, when it has been determined that the battery pack has deteriorated, the control unit controls processing to notify information indicating that the battery pack has deteriorated, in association with the battery pack.

### ADVANTAGEOUS EFFECTS OF INVENTION

The present disclosure as described above provides an arrangement enabling suitable management of battery packs.

### BRIEF DESCRIPTION OF DRAWINGS

[Fig. 1] is a diagram to illustrate the outline of a system according to an embodiment of the present disclosure.
[Fig. 2] is a schematic diagram schematically showing a first configuration example of an inhalation device according to the embodiment.
[Fig. 3] is a schematic diagram schematically showing a second configuration example of an inhalation device according to the embodiment.
[Fig. 4] is a block diagram showing a configuration example of a battery pack according to the embodiment.
[Fig. 5] is a block diagram showing a configuration example of a charging station according to the embodiment.
[Fig. 6] is a block diagram showing a configuration example of a management server according to the embodiment.
[Fig. 7] is a sequence chart showing an example of a processing flow implemented by the system according to the embodiment.
[Fig. 8] is a flowchart showing an example of a processing flow implemented by the charging station according to the embodiment.
[Fig. 9] is a flowchart showing an example of a processing flow implemented by the charging station according to the embodiment.

### EMBODIMENTS OF THE INVENTION

Preferred embodiments of the present disclosure will be described in detail below with reference to the appended drawings. It should be noted that components having substantially the same functional configuration will be assigned the same reference numbers in the description and drawings to avoid giving a duplicate description.

### <1. Outline>

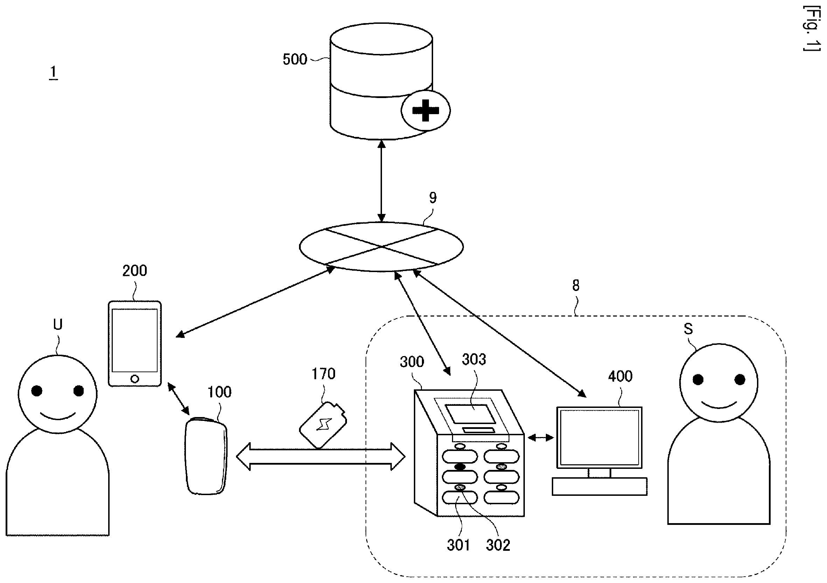

An outline of a system according to an embodiment of the present disclosure will be described first of all with reference to fig. 1.

Fig. 1 is a diagram to illustrate the outline of the system according to this embodiment. As shown in fig. 1, a system 1 according to this embodiment comprises: an inhalation device 100, a user terminal 200, a charging station 300, a sales outlet terminal 400, and a management server 500.

The inhalation device 100 and the user terminal 200 are carried and used by a user U. An inhalation device 100 and a user terminal 200 used by the same user U may be capable of communicating by using, for example, BLE (Bluetooth Low Energy (registered trademark)), or similar.

The inhalation device 100 is a device for generating an aerosol to be inhaled by the user U, using a substrate containing an aerosol source. The inhalation device 100 may be what is known as an electronic cigarette or heated tobacco. The inhalation device 100 may have a battery pack 170 detachably fitted (i.e., connected) thereto. The inhalation device 100 then operates with power from the battery pack 170 fitted thereto. A structure with the battery pack 170 removed from the inhalation device 100 may be referred to below as a "main body", or may also be referred to simply as the "inhalation device 100".

The battery pack 170 includes at least a secondary battery which can be charged and discharged. The battery pack 170 may comprise a storage medium and a communication terminal. Information may then be read from and written to the storage medium via the communication terminal by means of the inhalation device 100 or the charging station 300 to which the battery pack 170 is connected.

The user terminal 200 is an example of a terminal device used by the user U. The user terminal 200 may be a smartphone or tablet terminal, or similar. The user terminal 200 functions as an interface between the user U and the system 1. For example, the user terminal 200 inputs/outputs various types of information for replacement of the battery pack 170. Furthermore, the user terminal 200 may control operation of the inhalation device 100 by way of communication with the inhalation device 100.

The charging station 300 and the sales outlet terminal 400 are placed in a sales outlet 8 such as a convenience store, and are used by staff S working at the sales outlet 8. A charging station 300 and a sales outlet terminal 400 placed in the same sales outlet 8 may be capable of communicating by using, for example, a LAN (Local Area Network), or similar. The sales outlet 8 sells substrate packs containing one or more substrates used by the inhalation device 100. The sales outlet 8 may sell multiple types of substrate packs containing different types of substrates or different numbers of substrates.

The charging station 300 is an example of a charging device for charging battery packs 170, and a battery pack provision device for replaceably providing a charged battery pack 170 to each of a plurality of inhalation devices 100. The charging station 300 may have the battery pack 170 detachably connected thereto. The charging station 300 then charges the connected battery pack 170. To be more specific, the charging station 300 comprises an accommodating case 301 for accommodating the battery pack 170. The charging station 300 then charges the battery pack 170 accommodated in the accommodating case 301. Furthermore, the charging station 300 has an LED (light-emitting diode) 302, and a touch panel 303 for inputting/outputting various types of information. The LED 302 is arranged correspondingly with the accommodating case 301 and emits light in a color corresponding to the state of the corresponding accommodating case 301 (e.g., whether or not the accommodating case 301 is vacant, whether or not charging is in progress, and charging progress if charging is in progress).

The user U can replace the battery pack 170 fitted to the inhalation device 100 at the sales outlet 8. "Replacement" as referred to here means return of a spent battery pack 170 and provision of a battery pack 170 charged by the charging station 300.

For example, the user U returns the spent battery pack 170 after removing it from the inhalation device 100. The staff S connects the battery pack 170 returned by the user to the charging station 300 to start charging, and also removes a charged battery pack 170 from the charging station 300 for provision to the user U. The user U receives the battery pack 170 provided by the staff S and fits this battery pack 170 to the inhalation device 100. A battery pack 170 replacement service such as this enables the user U to replace a spent battery pack 170 with a fully charged battery pack 170 at any time "on the go", without the need to charge at home.

The charging station 300 may notify the staff S of a vacant accommodating case 301 where the battery pack 170 can be returned, by means of the LED 302 or the touch panel 303. Furthermore, the charging station 300 may also notify the staff S, by means of the LED 302 or the touch panel 303, to remove the battery pack 170 from the accommodating case 301 accommodating a fully charged battery pack 170, and to provide the fully charged battery pack 170 to the user U.

The service provided by the charging station 300 is not limited to replacement of battery packs 170. That is to say, the charging station 300 may accept only return of battery packs 170 or may only provide battery packs 170. For example, the user U may rent a spare battery pack 170, separately from the battery pack 170 they are carrying, or may return a rented spare battery pack 170.

Battery packs 170 are thus replaceably provided to each of a plurality of inhalation devices 100, via the charging station 300. The user U may, of course, also charge the battery pack 170 at home, etc.

The sales outlet terminal 400 is an example of a terminal device used by the staff S. The sales outlet terminal 400 may be a cash register terminal compliant with a POS (Point of Sale) system, for example. The sales outlet terminal 400 functions as an interface between the staff S and the system 1. For example, the sales outlet terminal 400 input/outputs various types of information for replacement of the battery pack 170. Furthermore, the sales outlet terminal 400 is also used to settle payments for replacement of battery packs 170.

It should be noted that the battery pack 170 is manufactured and operated in such a way as to have a capacity enabling at least all substrates contained in a substrate pack to be consumed when the battery pack 170 is fully charged. For this reason, it is desirable for a battery pack 170 to be replaced at the same timing as a substrate pack being purchased. This is because, in such a case, the battery pack 170 does not need to be replaced until all of the substrates contained in the substrate pack have been consumed.

For example, when the user U has purchased a substrate pack, the sales outlet terminal 400 may notify the staff S of information to prompt the user U to replace their battery pack 170. Alternatively, replacement of a battery pack 170 may be possible, or replacement of a battery pack 170 may be free of cost only when a substrate pack has been purchased. This feature enables better usability because the battery pack 170 is replaced at the same timing as a substrate pack being purchased.

The management server 500 is an example of a control device for controlling overall operation within the system 1. The management server 500 communicates via a network 9 with each of the user terminal 200, the charging station 300, and the sales outlet terminal 400, and controls operations thereof.

As an example, the management server 500 collects and analyzes various types of information relating to replacement of battery packs 170, and, based on analysis results, updates heating profiles and notifies the user U of the timing for replacing the battery pack 170. As another example, the management server 500 controls displays on the user terminal 200, charging station 300, and sales outlet terminal 400. As another example, the management server 500 performs processing to recover deteriorated or faulty battery packs 170 (i.e., to remove such battery packs from circulation), and to repair those battery packs which are repairable for recirculation.

### <2. Configuration Example>

### <2.1. Configuration example of inhalation device 100>

The inhalation device 100 is a device for generating a substance to be inhaled by a user. Hereinafter, the substance generated by the inhalation device 100 will be described as being an aerosol. Alternatively, the substance generated by the inhalation device 100 may be a gas.

### (1) First configuration example

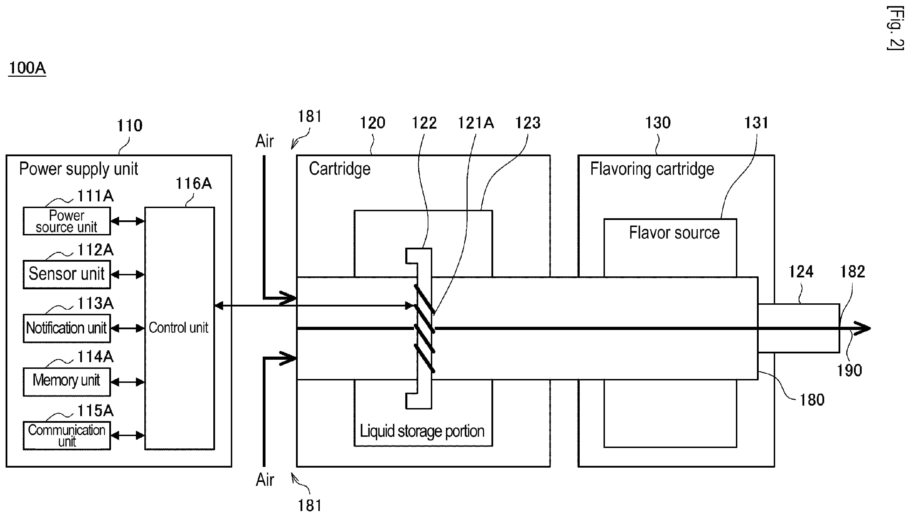

Fig. 2 is a schematic diagram schematically showing a first configuration example of the inhalation device 100 according to this embodiment. As shown in fig. 2, an inhalation device 100A according to this configuration example includes a power supply unit 110, a cartridge 120, and a flavoring cartridge 130. The power supply unit 110 comprises a power source unit 111A, a sensor unit 112A, a notification unit 113A, a memory unit 114A, a communication unit 115A, and a control unit 116A. The cartridge 120 includes a heating unit 121A, a liquid guiding portion 122, and a liquid storage portion 123. The flavoring cartridge 130 includes a flavor source 131 and a mouthpiece 124. An air flow path 180 is formed in the cartridge 120 and the flavoring cartridge 130.

The power source unit 111A stores electrical power. The power source unit 111A then supplies the electrical power to each component of the inhalation device 100A in accordance with control performed by the control unit 116A. The power source unit 111A may be configured, for example, by a rechargeable battery such as a lithium ion secondary battery.

The sensor unit 112A acquires various types of information relating to the inhalation device 100A. As an example, the sensor unit 112A is configured by a pressure sensor such as a condenser microphone, a flow rate sensor or a temperature sensor, etc., and acquires values associated with inhalation by a user. As another example, the sensor unit 112A is configured by an input device, such as a button or switch, for accepting input of information from the user.

The notification unit 113A notifies the user of information. The notification unit 113A is, for example, configured by a light-emitting device that emits light, a display device that displays images, a sound output device that outputs sound, or a vibration device that vibrates, etc.

The memory unit 114A stores various types of information for operation of the inhalation device 100A. The memory unit 114A is configured by a non-volatile storage medium such as a flash memory, for example.

The communication unit 115A is a communication interface capable of performing communication conforming to any wired or wireless communication standard. Examples of communication standards that may be used include standards that employ Wi-Fi (registered trademark), Bluetooth (registered trademark), BLE (Bluetooth Low Energy) (registered trademark), NFC (Near-Field Communication), or LPWA (Low Power Wide Area), for example.

The control unit 116A functions as an arithmetic processing device and a control device, and controls overall operation within the inhalation device 100A in accordance with various programs. The control unit 116A is realized by a CPU (central processing unit) or an electronic circuit such as a microprocessor, for example.

The liquid storage portion 123 stores the aerosol source. The aerosol source is atomized to generate an aerosol. The aerosol source is a polyhydric alcohol such as glycerol or propylene glycol, or a liquid such as water, for example. The aerosol source may include a tobacco-derived or non-tobacco-derived flavor component. If the inhalation device 100A is a medical inhaler such as a nebulizer, the aerosol source may include a drug.

The liquid guiding portion 122 guides the aerosol source, which is a liquid stored in the liquid storage portion 123, from the liquid storage portion 123, and holds the aerosol source. The liquid guiding portion 122 is, for example, a wick formed by twisting either a fibrous material such as glass fibers or a porous material such as a porous ceramic. In this case, the aerosol source stored in the liquid storage portion 123 is guided by the capillary effect of the wick.

The heating unit 121A heats the aerosol source to atomize the aerosol source, thereby generating the aerosol. In the example shown in fig. 2, the heating unit 121A is configured as a coil wrapped around the liquid guiding portion 122. When the heating unit 121A generates heat, the aerosol source held in the liquid guiding portion 122 is heated and atomized, generating the aerosol. The heating unit 121A generates heat when supplied with electricity from the power source unit 111A. By way of example, electricity may be supplied when the sensor unit 112A detects that the user has started inhaling and/or that predetermined information has been input. The supply of electricity may then be stopped when the sensor unit 112A detects that the user has finished inhaling and/or that predetermined information has been input.

The flavor source 131 is a component for imparting a flavor component to the aerosol. The flavor source 131 may include tobacco-derived or non-tobacco-derived flavor components.

The air flow path 180 is a flow path for air to be inhaled by the user. The air flow path 180 has a tubular structure with an air inflow hole 181, which is an inlet for air into the air flow path 180, and an air outflow hole 182, which is an outlet for air from the air flow path 180, at the two ends thereof. Part way along the air flow path 180, the liquid guiding portion 122 is disposed on the upstream side (the side closer to the air inflow hole 181), and the flavor source 131 is disposed on the downstream side (the side closer to the air outflow hole 182). Air that flows in through the air inflow hole 181 as the user inhales is mixed with the aerosol generated by the heating unit 121A and is transported through the flavor source 131 to the air outflow hole 182, as shown by the arrow 190. When the mixed fluid of aerosol and air passes through the flavor source 131, the flavor component contained in the flavor source 131 is added to the aerosol.

The mouthpiece 124 is a member that is held in the user's mouth during inhalation. The air outflow hole 182 is disposed in the mouthpiece 124. The user holds the mouthpiece 124 in their mouth and inhales, making it possible to draw the mixed fluid of aerosol and air into the oral cavity.

A configuration example of the inhalation device 100A has been described above. The inhalation device 100A is, of course, not limited to the configuration described above, and various configurations, such as those illustrated below by way of example may be adopted.

As an example, the inhalation device 100A need not include the flavoring cartridge 130. In this case, the cartridge 120 is provided with the mouthpiece 124.

As another example, the inhalation device 100A may include a plurality of types of aerosol sources. A plurality of types of aerosol generated from the plurality of types of aerosol sources may be mixed within the air flow path 180 to cause a chemical reaction, thereby generating yet more other types of aerosol.

Furthermore, the means for atomizing the aerosol source is not limited to heating by the heating unit 121A. For example, the means for atomizing the aerosol source may be vibration atomization or induction heating.

### (2) Second configuration example

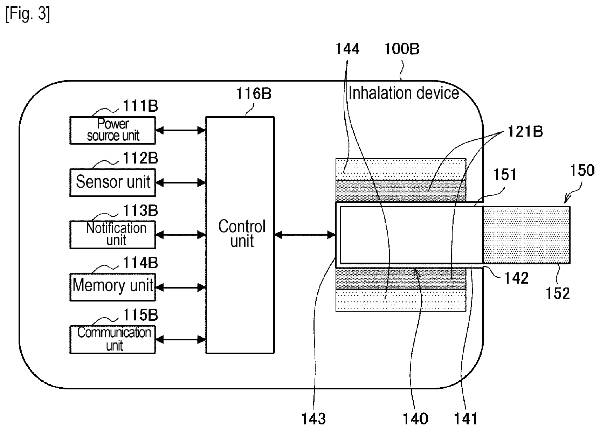

Fig. 3 is a schematic diagram schematically showing a second configuration example of the inhalation device 100 according to this embodiment. As shown in fig. 3, an inhalation device 100B according to this configuration example comprises a power source unit 111B, a sensor unit 112B, a notification unit 113B, a memory unit 114B, a communication unit 115B, a control unit 116B, a heating unit 121B, an accommodating portion 140, and a heat insulating portion 144.

The power source unit 111B, sensor unit 112B, notification unit 113B, memory unit 114B, communication unit 115B, and control unit 116B are each substantially the same as the corresponding component included in the inhalation device 100A of the first configuration example.

The accommodating portion 140 has an internal space 141, and holds a stick-type substrate 150 while accommodating a portion of the stick-type substrate 150 in the internal space 141. The accommodating portion 140 has an opening 142 allowing the internal space 141 to communicate with the outside, and accommodates the stick-type substrate 150 which has been inserted into the internal space 141 from the opening 142. For example, the accommodating portion 140 is a cylindrical body comprising the opening 142 and a bottom portion 143 serving as a bottom surface, and defines a columnar internal space 141. An air flow path for supplying air to the internal space 141 is connected to the accommodating portion 140. An air inflow hole, which is an inlet for air into the air flow path, is disposed in a side surface of the inhalation device 100B, for example. An air outflow hole, which is an outlet for air from the air flow path to the internal space 141, is disposed in the bottom portion 143, for example.

The stick-type substrate 150 comprises a substrate portion 151 and a mouthpiece portion 152. The substrate portion 151 contains an aerosol source. The aerosol source includes a tobacco-derived or non-tobacco-derived flavor component. If the inhalation device 100B is a medical inhaler such as a nebulizer, the aerosol source may include a drug. The aerosol source may, for example, be a liquid such as water and a polyhydric alcohol, for example glycerol or propylene glycol, containing the tobacco-derived or non-tobacco-derived flavor component, or may be a solid including the tobacco-derived or non-tobacco-derived flavor component. In a state in which the stick-type substrate 150 is held in the accommodating portion 140, at least part of the substrate portion 151 is accommodated in the internal space 141, and at least part of the mouthpiece portion 152 protrudes from the opening 142. Then, when the user holds the mouthpiece portion 152 protruding from the opening 142 in their mouth and inhales, air flows into the internal space 141 via the air flow path which is not depicted, and reaches the inside of the user's mouth together with the aerosol generated from the substrate portion 151.

In the example shown in fig. 3, the heating unit 121B has a film-like form and is arranged so as to cover the outer circumference of the accommodating portion 140. Then, when the heating unit 121B generates heat, the substrate portion 151 of the stick-type substrate 150 is heated from the outer periphery, generating the aerosol.

The heat insulating portion 144 prevents heat transfer from the heating unit 121B to other components. For example, the heat insulating portion 144 is configured from a vacuum heat insulating material or an aerogel heat insulating material, or the like.

A configuration example of the inhalation device 100B has been described above. The inhalation device 100B is, of course, not limited to the configuration described above, and various configurations, such as those illustrated below by way of example may be adopted.

As one example, the heating unit 121B may be configured with a blade-like form and may be arranged so as to protrude into the internal space 141 from the bottom portion 143 of the accommodating portion 140. In that case, the blade-like heating unit 121B is inserted into the substrate portion 151 of the stick-type substrate 150 and heats the substrate portion 151 of the stick-type substrate 150 from the inside. As another example, the heating unit 121B may be arranged so as to cover the bottom portion 143 of the accommodating portion 140. Furthermore, the heating unit 121B may be configured from a combination of two or more from among a first heating unit covering the outer circumference of the accommodating portion 140, a blade-like second heating unit, and a third heating unit covering the bottom portion 143 of the accommodating portion 140.

As another example, the accommodating portion 140 may include an opening and closing mechanism such as a hinge for opening and closing part of an outer casing that forms the internal space 141. Then, by opening and closing the outer casing, the accommodating portion 140 may accommodate and grip the stick-type substrate 150 that has been inserted into the internal space 141. In this case, the heating unit 121B may be provided on the clamping part of the accommodating portion 140, and may heat the stick-type substrate 150 while pressing the same.

Furthermore, the means for atomizing the aerosol source is not limited to heating by the heating unit 121B. For example, the means for atomizing the aerosol source may be induction heating. In that case, the inhalation device 100B comprises at least an electromagnetic induction source such as a coil for generating a magnetic field, instead of the heating unit 121B. A susceptor, which generates heat by means of induction heating, may be provided in the inhalation device 100B, or may be contained in the stick-type substrate 150.

Furthermore, the inhalation device 100B may additionally include the heating unit 121A, the liquid guiding portion 122, the liquid storage portion 123, and the air flow path 180 according to the first configuration example, and the air flow path 180 may supply air to the internal space 141. In this case, the mixed fluid of the aerosol generated by the heating unit 121A and air flows into the internal space 141 and is further mixed with the aerosol generated by the heating unit 121B, and reaches the oral cavity of the user.

### (3) Supplementary information

In the following description, where there is no particular need to distinguish between the inhalation device 100A and the inhalation device 100B described above, the letter at the end of the reference sign will be omitted and these inhalation devices will be referred to in a general manner as the "inhalation device 100"and described without distinction. Similarly, where there is no particular need to distinguish between components common to the inhalation device 100A and the inhalation device 100B, the letter at the end of the reference sign will be omitted, and those components will be described without distinction.

The inhalation device 100 is an example of an aerosol-generating system which generates an aerosol to be inhaled by a user by using a substrate containing either one of an aerosol source and a flavor source. The flavor source is a component for imparting a flavor component to the aerosol. In the first configuration example, the cartridge 120 and the flavoring cartridge 130 constitute an example of a substrate used in the aerosol-generating system. In the second configuration example, the stick-type substrate 150 is an example of a substrate used in the aerosol-generating system. In terms of the second configuration example, the combination of the inhalation device 100 and the stick-type substrate 150 may also be seen as an aerosol-generating system.

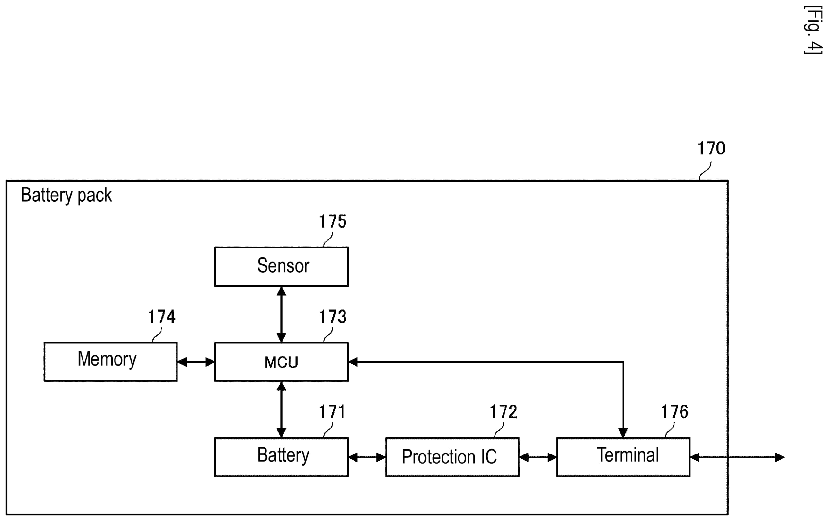

The battery pack 170 shown in fig. 1 includes at least the power source unit 111 shown in fig. 2 or fig. 3. A configuration example of the battery pack 170 will be described next with reference to fig. 4.

Fig. 4 is a block diagram showing a configuration example of the battery pack 170 according to this embodiment. As shown in fig. 4, the battery pack 170 comprises: a battery 171, a protection IC (Integration Circuit) 172, an MCU (Micro Controller Unit) 173, a memory 174, a sensor 175, and a terminal 176.

The battery 171 is a secondary battery which can be charged and discharged. The battery 171 corresponds to the power source unit 111 shown in fig. 2 or fig. 3. The battery 171 supplies power to an external device (e.g., the main body of the inhalation device 100) via the protection IC 172 and the terminal 176. Furthermore, the battery 171 is charged by means of power supplied from an external device (e.g., the charging station 300) via the protection IC 172 and the terminal 176.

The protection IC 172 is a protection circuit for stopping charging in the event of overcharging and stopping discharging in the event of over-discharge.

The MCU 173 is an example of a control unit for controlling operation of the battery pack 170. The battery pack 170 implements various types of processing on the basis of control performed by the MCU 173. Examples of the processing controlled by means of the MCU 173 include storage and reading of information by the memory 174, detection of information by the sensor 175, sending/receiving of power via the terminal 176, and sending/receiving of information via the terminal 176. Other processing implemented by the battery pack 170, such as processing based on input of information to each component and information output from each component, are also controlled by means of the MCU 173.

The memory 174 is an example of memory unit for storing information. The memory 174 is configured by a non-volatile storage medium such as a flash memory, for example.

The sensor 175 is an example of a detector for detecting various types of information relating to the battery pack 170. For example, the sensor 175 detects the temperature of the battery 171, and detects voltage values and current values during charging and discharging of the battery 171.

The terminal 176 functions as a power terminal for sending/receiving power and an information terminal for sending/receiving information to/from the device to which the battery pack 170 is connected. The terminal 176 may be a USB (Universal Serial Bus) connector, for example.

It should be noted that fig. 4 illustrates an example in which the protection IC 172 is included in the battery pack 170, but the protection IC 172 may equally be included in the device to which the battery pack 170 is connected (e.g., the main body of the inhalation device 100 or the charging station 300).

### (4) Heating profile

The control unit 116 controls the operation of the heating unit 121 based on the heating profile. The heating profile is control information for controlling the temperature at which the aerosol source is heated. The heating profile defines a target value of a parameter corresponding to a temperature at which the aerosol source is heated. The temperature of the heating unit 121 is an example of the temperature at which the aerosol source is heated. The resistance of the heating unit 121 is an example of a parameter corresponding to the temperature at which the aerosol source is heated. That is to say, the heating profile may also define a target value of the resistance of the heating unit 121 (which is also referred to below as the "target resistance"). The resistance of the heating unit 121 varies according to the temperature of the heating unit 121 (a heating resistor constituting the heating unit 121, to be more precise). By way of example, it is assumed hereinafter that the resistance of the heating unit 121 rises as the temperature of the heating unit 121 rises.

The temperature control of the heating unit 121 can be realized by known feedback control, for example. The feedback control may be, for example, PID control (Proportional-Integral-Differential Controller). The control unit 116 may cause power from the power source unit 111 to be supplied to the heating unit 121 in the form of pulses by pulse width modulation (PWM) or pulse frequency modulation (PFM). In that case, the control unit 116 can control the temperature of the heating unit 121 by adjusting the duty ratio of the power pulses in the feedback control.

A period during which electrical supply to the heating unit 121 is controlled on the basis of the heating profile, in other words a period during which heating by means of the heating unit 121 is implemented on the basis of the heating profile, will also be referred to below as a "heating session". Furthermore, heating based on the heating profile may also be referred to below simply as "heating".

### <2.2. Configuration example of charging station 300>

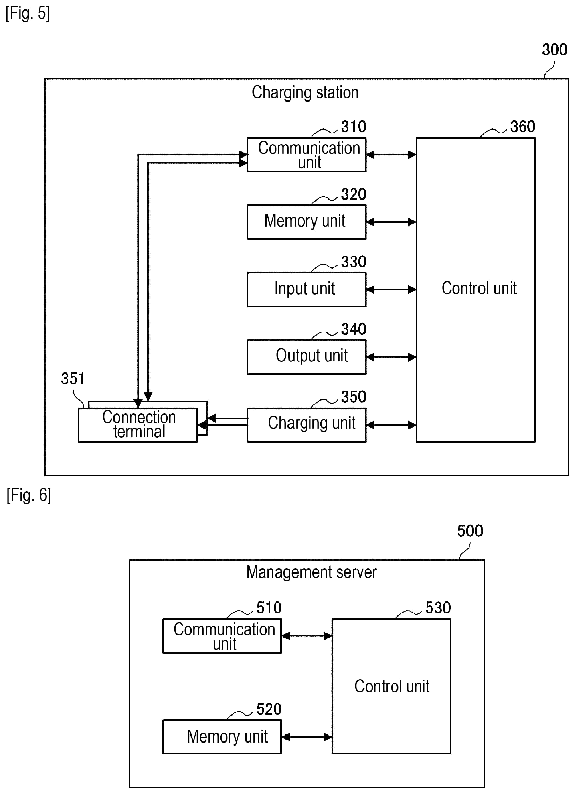

Fig. 5 is a block diagram showing a configuration example of the charging station 300 according to this embodiment. As shown in fig. 5, the charging station 300 comprises: a communication unit 310, a memory unit 320, an input unit 330, an output unit 340, a charging unit 350, one or more connection terminals 351, and a control unit 360.

The communication unit 310 is a communication interface for sending and receiving information between the charging station 300 and another device. As an example, the communication unit 310 sends/receives, via the connection terminal 351, information to/from the battery pack 170 connected to the connection terminal 351. As another example, the communication unit 310 sends/receives information to/from the management server 500. The communication unit 310 performs communication conforming to any wired or wireless communication standard. Examples of communication standards which may be used include USB (Universal Serial Bus), Wi-Fi (Registered Trademark), Bluetooth (registered trademark), NFC (Near Field Communication), or LAN (Local Area Network), etc.

The memory unit 320 stores various types of information. The memory unit 320 is configured by a non-volatile storage medium such as a flash memory, for example.

The input unit 330 has the function of receiving input of various types of information. The input unit 330 may include an input device for accepting input of information from the staff S, such as a button, a keyboard, a touch panel, or a microphone, for example. Alternatively, the input unit 330 may include a sensor for detecting various types of information. A camera capable of reading two-dimensional codes may be cited as an example of a sensor. The touch panel 303 described with reference to fig. 1 is an example of the input unit 330.

The output unit 340 has the function of outputting information. The output unit 340 may comprise an output device for outputting information to the staff S, such as a display device for displaying information, a light-emitting device for emitting light, a vibration device which vibrates, and a sound output device for outputting sound, for example. A display is an example of a display device. A light-emitting diode (LED) is an example of a light-emitting device. An eccentric motor is an example of a vibration device. A speaker is an example of a sound output device. The LEDs 302 and the touch panel 303 described with reference to fig. 1 are examples of the output unit 340.

The charging unit 350 has the function of charging the battery pack 170. A charging unit 350 is accommodated in the accommodating case 301 described with reference to fig. 1, and charges a battery pack 170 which has been electrically connected to the charging station 300. In particular, the charging unit 350 charges a battery pack 170 connected to the connection terminal 351.

The connection terminal 351 is an example of a connecting portion which is electrically connected to the battery pack 170. The connection terminal 351 functions as a power terminal for sending/receiving power and an information terminal for sending/receiving information to/from the battery pack 170 connected to the connection terminal 351. The connection terminal 351 may be a USB connector, for example. The connection terminal 351 is disposed in the accommodating case 301 and electrically connects to the terminal 176 of the battery pack 170 accommodated in the accommodating case 301. As shown in fig. 1, the charging station 300 may comprise a plurality of accommodating cases 301. That is to say, the charging station 300 may comprise a plurality of connection terminals 351 for simultaneously charging a plurality of battery packs 170 in parallel. It should be noted that the electrical connection between the battery pack 170 and the charging station 300 is not limited to a wired connection and may equally be a wireless connection (i.e., wireless charging).

The integrated structure comprising the accommodating case 301 and the connection terminal 351 for charging one battery pack 170 will also be referred to below as a "charging point".

The control unit 360 functions as an arithmetic processing device or a control device, controlling overall operation within the charging station 300 in accordance with various programs. The control unit 360 is realized by a CPU (central processing unit) or an electronic circuit such as a microprocessor, for example. The control unit 360 may also include a ROM (read-only memory) for storing programs and computation parameters, etc. which are used, and a RAM (random access memory) for temporarily storing suitably changing parameters, etc. The charging station 300 implements various types of processing on the basis of control performed by the control unit 360. Examples of processing controlled by means of the control unit 360 include: sending/receiving of information by the communication unit 310, storage and reading of information by the memory unit 320, processing of information input by the input unit 330, output of information from the output unit 340, and starting/stopping of charging by the charging unit 350. Other processing implemented by the charging station 300, such as processing based on input of information to each component and information output from each component, are also controlled by means of the control unit 360.

### <2.3. Configuration example of management server 500>

Fig. 6 is a block diagram showing a configuration example of the management server 500 according to this embodiment. As shown in fig. 6, the management server 500 includes a communication unit 510, a memory unit 520, and a control unit 530.

The communication unit 510 is a communication interface for sending and receiving information between the management server 500 and another device. The communication unit 510 performs communication conforming to any wired or wireless communication standard.

The memory unit 520 stores various types of information for operation of the management server 500. The memory unit 520 is constructed of a non-volatile storage medium such as, for example, an HDD (Hard Disk Drive) and an SSD (Solid State Drive).

The control unit 530 functions as an arithmetic processing device and a control device, controlling overall operation within the management server 500 in accordance with various programs. The control unit 530 is realized by a CPU (Central Processing Unit) and an electronic circuit such as a microprocessor, for example. The control unit 530 may also include a ROM (read-only memory) for storing programs and computation parameters, etc. which are used, and a RAM (random access memory) for temporarily storing suitably changing parameters, etc. The management server 500 implements various types of processing on the basis of control performed by the control unit 530. Sending and receiving of information by the communication unit 510, and storage/reading of information by the memory unit 520 are examples of processing controlled by the control unit 530. Other processing implemented by the management server 500, such as processing based on input of information to each component and information output from each component, are also controlled by means of the control unit 530.

### <3. Collection of information via battery pack 170>

An external device such as the main body of the inhalation device 100 or the charging station 300 may write various types of information to the memory 174 while connected to the battery pack 170. More specifically, the MCU 173 writes information received from the external device into the memory 174 via the terminal 176 while connected to the external device. As an example, the MCU 173 may receive information relating to electrical supply to the main body of the inhalation device 100 from the battery 171 while the battery pack 170 is connected to the main body of the inhalation device 100, and may write this information into the memory 174. As another example, the MCU 173 may receive information relating to charging of the battery 171 by the charging station 300 while the battery pack 170 is connected to the charging station 300, and may write this information into the memory 174.

Of course, the battery pack 170 may write information acquired by the battery pack 170 itself into the memory 174. As an example, the MCU 173 may write, into the memory 174, information detected by means of the sensor 175 while the battery pack 170 is connected to the main body of the inhalation device 100. As another example, the MCU 173 may write, into the memory 174, information detected by means of the sensor 175 while the battery pack 170 is connected to the charging station 300.

While the battery pack 170 is connected to an external device such as the main body of the inhalation device 100 or the charging station 300, the MCU 173 sends information stored in the memory 174 to the external device via the terminal 176. As a result, the external device can perform various types of processing using the information received from the battery pack 170. For example, the charging station 300 sends the information received by the battery pack 170 to the management server 500.

Preferably, the management server 500 periodically collects and analyzes information relating to the inhalation device 100, and implements measures using the analysis results in order to improve the quality of experience for the user who is using the inhalation device 100. The information relating to the inhalation device 100 is typically collected by the management server 500 via the user terminal 200, which is capable of communicating with both the inhalation device 100 and the management server 500. However, it is difficult for information to be collected periodically via the user terminal 200 if the inhalation device 100 does not communicate with the user terminal 200, or if the user terminal 200 does not communicate with the management server 500.

In this regard, the configuration above enables the management server 500 to periodically collect information relating to the inhalation device 100 via the charging station 300 to which the battery pack 170 is connected when the battery pack 170 is replaced. As a result, various measures can be implemented to improve the quality of experience for the user who is using the inhalation device 100, thereby enabling a better quality of user experience.

Furthermore, the configuration above enables exchange of information among external devices via the battery pack 170. The creation of various services is expected as a result.

Examples of the information which can be stored in the battery pack 170 and collected by utilizing replacement of the battery pack 170 will be described below.

### (1) Battery pack ID

The memory 174 of the battery pack 170 stores a battery pack ID, which is identification information of the battery pack 170. The battery pack ID may be written in when the battery pack 170 is manufactured.

### (2) Specification information

The memory 174 of the battery pack 170 stores specification information, which is information indicating the specification of the battery pack 170.

The specification information of the battery pack 170 may include a manufacturer ID, which is identification information of the manufacturer which manufactured the battery pack 170.

The specification information of the battery pack 170 may include information indicating a date of manufacture of the battery pack 170.

The specification information of the battery pack 170 may include information indicating the model of battery pack 170.

The specification information of the battery pack 170 may include information indicating the initial capacity of the battery 171.

The specification information of the battery pack 170 may include information indicating a maximum charging voltage and charging rate of the battery 171.

### (3) Replacement log

The memory 174 of the battery pack 170 stores a replacement log, which is a log relating to replacement of the battery pack 170. The replacement log may include at least any one item of information from those illustrated below.

The replacement log may include a device ID, which is identification information of an inhalation device 100 to which the battery pack 170 provided from the charging station 300 was connected. The replacement log may further include a user ID, which is identification information of the user U of the inhalation device 100 to which the battery pack 170 provided from the charging station 300 was connected.

The replacement log may include information indicating a time of replacement of the battery pack 170. More specifically, the replacement log may include information indicating the time at which the battery pack 170 was provided (e.g., the date and time at which the battery pack 170 was removed from the charging station 300, or the date and time at which the battery pack 170 was connected to the inhalation device 100). Furthermore, the replacement log may include information indicating the time at which the battery pack 170 was returned (e.g., the date and time at which the battery pack 170 was removed from the inhalation device 100, or the date and time at which the battery pack 170 was connected to the charging station 300).

The replacement log may include information indicating the place where the battery pack 170 was replaced. More specifically, the replacement log may include information indicating the place where the battery pack 170 was provided (e.g., location information or identification information of the sales outlet 8). The replacement log may furthermore include information indicating the place where the battery pack 170 was returned (e.g., location information or identification information of the sales outlet 8).

The replacement log may include information of a substrate pack purchased together with replacement of the battery pack 170. The substrate pack information includes the type of substrate and number of substrates contained in the substrate pack, for example.

The replacement log may include information indicating the number of times of replacement of the battery pack 170. The number of times of replacement of the battery pack 170 may be incremented each time the battery pack 170 is connected to a different inhalation device 100 from the previous time. Alternatively, the number of times of replacement of the battery pack 170 may be incremented each time the battery pack 170 is connected to the charging station 300.

An example of the replacement log was described above. The replacement log may be acquired by and written to the main body of the inhalation device 100, the charging station 300, or the battery pack 170 at the time of replacement of the battery pack 170, for example. Moreover, for the information of a substrate pack purchased together with replacement of the battery pack 170, the charging station 300 may acquire this information from the sales outlet terminal 400 and write the information into the memory 174 of the battery pack 170.

### (4) Heating-related discharge information

The memory 174 of the battery pack 170 stores heating-related discharge information, which is information indicating the discharge situation of the battery 171 when the heating unit 121 implemented heating based on the heating profile. The heating-related discharge information may include at least any one item of information from those illustrated below.

The heating-related discharge information may include the value of a drop in voltage of the battery 171 when the heating unit 121 implemented heating. The value of the drop in voltage of the battery 171 may be the difference in voltage of the battery 171 before and after heating was implemented. This information makes it possible to judge the state of deterioration of the battery pack 170 (more specifically, the battery 171), or whether an error has occurred.

The heating-related discharge information may include the value of a reduction in charge capacity (units: mAh) of the battery 171 when the heating unit 121 implemented heating. The value of the reduction in charge capacity of the battery 171 may be the difference in charge capacity before and after heating was implemented, or the difference in charge capacity from the time of manufacture until the present time. This information makes it possible to judge the state of deterioration of the battery pack 170, or whether an error has occurred.

The heating-related discharge information may include the value of an increase in temperature of the battery 171 when the heating unit 121 implemented heating. The value of the increase in temperature of the battery 171 may be the difference between the minimum temperature and maximum temperature during a heating session. This information makes it possible to judge the state of deterioration of the battery pack 170, or whether an error has occurred.

The heating-related discharge information may include a time-series transition of the discharge amount during a heating session. The discharge amount temporarily increases immediately after a puff has been taken in order to restore the temperature of the heating unit 121, which decreases as a puff is taken, to its original value. This information makes it possible to determine the number of puffs taken during a heating session.

The heating-related discharge information may include the number of times discharging was performed for heating. This information makes it possible to determine the number of times heating was implemented.

The heating-related discharge information may include intervals between discharges performed for heating. This information makes it possible to determine intervals of heating implementation.

The heating-related discharge information may include at least either of the discharge amount and discharge time when heating was implemented. This information makes it possible to determine the heating profile used by the inhalation device 100.

The heating-related discharge information may include the number of times discharging was performed for an autorun function. The autorun function is a function in which the start of heating is triggered by a substrate being set in (e.g., inserted into or connected to) the inhalation device 100. This information makes it possible to determine the number of times the autorun function was implemented.

The heating-related discharge information may include the number of times abnormal discharge occurred and the discharge amount when the abnormal discharge occurred. This information makes it possible to record errors that have occurred in the battery pack 170.

Examples of heating-related discharge information were described above. The heating-related discharge information may be acquired by the battery pack 170 or the main body of the inhalation device 100, and may be written into the memory 174, for example.

### (5) Non-heating-related discharge information

The memory 174 of the battery pack 170 stores non-heating-related discharge information, which is information indicating the discharge situation of the battery 171 during periods in which heating based on the heating profile is not being implemented. The non-heating-related discharge information may include at least any one item of information from those illustrated below.

The non-heating-related discharge information may include the number of times discharging was performed for a transition from sleep mode to active mode. This information makes it possible to determine the number of transitions from sleep mode to active mode. It should be noted that sleep mode is an operating mode in which heating is prohibited. Sleep mode can be switched to active mode in response to a user action such as depressing a button, for example. Active mode is an operating mode in which heating is permitted. In active mode, heating is started in response to a user action such as depressing a button, for example.

The non-heating-related discharge information may include at least either of the discharge amount and discharge time during periods of continuous communication by the communication unit 115. This information makes it possible to determine a communication amount or a communication time of the inhalation device 100.

Examples of non-heating-related discharge information were described above. The non-heating-related discharge information may be acquired by the battery pack 170 or the main body of the inhalation device 100, and may be written into the memory 174, for example.

### (6) Device information

The memory 174 of the battery pack 170 stores device information, which is information indicating the mode of use of the inhalation device 100. The device information may include at least any one item of information from those illustrated below.

The device information may include information indicating a time of smoking. "Smoking" refers to the overall action of the user U inhaling the aerosol generated during heating based on the heating profile. Multiple puffs may be taken during one occasion of "smoking". The information indicating the time of smoking may be a date and time at which heating started, or may be a date and time of the puff initially detected during a heating session. This information makes it possible to determine smoking intervals (i.e., heating session intervals), the number of times of smoking per day (i.e., the number of heating sessions), and the total number of times of smoking.

The device information may include information indicating a smoking time. The information indicating the smoking time of the user U may be the length of a heating session, or may be the time from the puff initially detected until the puff detected last during a heating session. This information can be utilized to customize the heating profile to suit the user U.

The device information may include information indicating a total smoking time. The total smoking time is the cumulative total of smoking times since the inhalation device 100 was manufactured. This information can be utilized in order to recommend timings for maintenance of the inhalation device 100. Furthermore, this information makes it possible to determine the smoking time over the entire life-cycle of the inhalation device 100.

The device information may include information indicating a total number of times of smoking. The total number of times of smoking is the cumulative total of the number of times of smoking since the inhalation device 100 was manufactured. This information can be utilized in order to recommend timings for maintenance of the inhalation device 100. Furthermore, this information makes it possible to determine the number of times of smoking over the entire life-cycle of the inhalation device 100.

The device information may include information indicating a total usage time. The total usage time is the time elapsed from the time at which the inhalation device 100 was initially activated. This information can be utilized in order to recommend timings for maintenance of the inhalation device 100. Furthermore, this information makes it possible to determine the usage time of the inhalation device 100 over the entire life-cycle of the inhalation device 100.

The device information includes information indicating a security setting. The inhalation device 100 may be equipped with a security function enabling locking for child safety, etc. When the security function is enabled, the inhalation device 100 operates in a locked state with heating prohibited or operates in an unlocked state with heating permitted. Unlocking may be triggered in a number of ways, such as when a predetermined button is operated or when a communication connection with the user terminal 200 has been established. When the security function is disabled, heating is continuously permitted by the inhalation device 100. The information indicating the security setting may include a time at which the security function was enabled and a time at which the security function was disabled. The information indicating the security setting may further include, during a period in which the security function is enabled, a time of transition to the locked state and a time of transition to the unlocked state, and information indicating the unlock trigger. By referring to the information indicating the security setting together with the information indicating the time of smoking described above, it is possible to determine which unlock trigger was used to start smoking, or to determine that smoking was started while the security setting was disabled, etc.

The device information may include information indicating the number of puffs. The number of puffs is the number of times puffing was detected during a heating session. This information makes it possible to determine the number of puffs taken by the user U during one smoking session. This information can be utilized to customize the heating profile to suit the user U.

The device information may include information indicating times of puffing. The times of puffing are times at which puffing was detected during a heating session. This information makes it possible to determine when the user U took puffs during a heating session. This information can be utilized to customize the heating profile to suit the user U.

The device information may include location information of the inhalation device 100. More specifically, the device information may include a time-series transition of location information of the inhalation device 100. Moreover, the location information of the user terminal 200 may also be used as location information of the inhalation device 100. This information makes it possible to determine behavior patterns of the user U. The behavior patterns of the user U can be utilized for the user terminal 200 to suggest smoking places or sales outlets 8 suited to the behavior patterns of the user U.

The device information may include information indicating an error that has occurred in the inhalation device 100. This information can be utilized in order to recommend timings for maintenance of the inhalation device 100.

Examples of device information were described above. The device information may be acquired by the battery pack 170 or the main body of the inhalation device 100, and may be written into the memory 174, for example.

### (7) Charging information

The memory 174 of the battery pack 170 stores charging information, which is information indicating the charging situation of the battery 171. The charging information may include at least any one item of information from those illustrated below.

The charging information may include information indicating the number of times of charging. The number of times of charging means the number of times that the battery pack 170 was connected to the charging station 300 or to a home charger, or similar. This information makes it possible to determine the state of deterioration of the battery pack 170.

The charging information may include information indicating charging intervals. A charging interval is the elapsed time from removal of the battery pack 170 from the charging station 300 or a home charger, etc., until connection thereto. This information makes it possible to determine the state of deterioration of the battery pack 170.

The charging information may include information indicating the time of charging and the amount of charging per charge. The time of charging means the date and time at which the battery pack 170 was connected to the charging station 300 or to a home charger, or similar. The amount of charging per charge means the value of voltage increase resulting from charging. This information makes it possible to determine the situation for each charge, and the state of deterioration of the battery pack 170.

The charging information may include information indicating a charging voltage or charging current. The charging voltage means the value of a voltage applied to the battery 171 during charging. The charging current means the value of a current flowing through the battery 171 during charging. This information makes it possible to determine the device which charged the battery pack 170 (charging station 300 or home charger).

The charging information may include information relating to location during charging. This information makes it possible to determine the place where the battery pack 170 was charged (e.g., at the sales outlet 8 or at home).

The charging information may include the number of times abnormal charging occurred and the amount of charging when the abnormal charging occurred. This information makes it possible to record errors that have occurred in the battery pack 170.

The charging information may include information indicating the SOH (States of Health) of the battery 171. This information makes it possible to determine the state of deterioration of the battery 171.

Examples of charging information were described above. The charging information may be acquired by the battery pack 170 or the charging station 300, and may be written into the memory 174, for example.

### (8) Supplementary information

Examples of the information which can be stored in the battery pack 170 and collected by utilizing replacement of the battery pack 170 were described above.

The battery pack 170 can store, in association with each other, at least two or more of the battery pack ID, replacement log, heating-related discharge information, non-heating-related discharge information, device information, and charging information, and can also send this information. This configuration enables more precise analysis of the information collected. For example, by associating the replacement log with the heating-related discharge information, it is possible to analyze the heating-related discharge situation of the inhalation device 100 identified by the device ID included in the replacement log.

### <4. Specific example of collecting information>

A specific example of collecting information through the battery pack 170 will be described below.

### (1) Processing for operation of the battery pack 170

The battery pack 170 creates a database (also referred to below as a "DB") which stores information relating to an operating history of the battery pack 170, and stores this database in the memory 174. The DB created by the battery pack 170 includes at least either one of a discharge history information DB, which is a DB of information indicating the discharge history of the battery pack 170, and a charging history information DB, which is a DB of information indicating the charging history of the battery pack 170. The discharge history information DB may include the abovementioned heating-related discharge information, for example. The charging history information DB may include the abovementioned charging information, for example.

An example of the discharge history information DB is shown in Table 1 below.

**[Table 1]**

| Table 1. Example of discharge history information DB | | | | | | | | | | | |
|---|---|---|---|---|---|---|---|---|---|---|---|
| Data ID | Battery pack ID | Start time | End time | Device type | FWIDF | Brand ID | Heating profile ID | Voltage/ current/ internal resistance | Temperature | Remaining battery capacity | Error code |
| XXX | XXX | YY/MM/DD | YY/MM/DD | XXX | XXX | XXX | XXX | X[V] | X[ °C] | X[mAh] | - |
| | | HH:MM:TT | HH:MM:TT | | | | | X[A] | | | |
| | | | | | | | | X [ Ω ] | | | |
| YYY | YYY | YY/MM/DD | YY/MM/DD | YYY | YYY | YYY | YYY | Y[V] | Y[ °C] | Y[mAh] | EEE |
| | | HH:MM:TT | HH:MM:TT | | | | | Y [A] | | | |
| | | | | | | | | Y [ Ω ] | | | |
| ... | ... | ... | ... | ... | | ... | ... | ... | . | ... | ... |

Data ID is identification information uniquely assigned to one row of data included in the DB (also referred to below as a "record"). Start time is the time at the start of heating based on the heating profile. End time is the time at the end of heating based on the heating profile. Device type is information indicating the type of inhalation device 100 to which the battery pack 170 is connected, and the device type may be the device ID. FWID (Firmware ID) is identification information of the firmware of the inhalation device 100 to which the battery pack 170 is connected. Brand ID is identification information indicating the brand of substrate being heated. The brand ID may be acquired by image recognition of a two-dimensional barcode attached to the surface of the substrate, or on the basis of user input to the user terminal 200, for example. Heating profile ID is identification information of the heating profile used for heating. Voltage/current/internal resistance are the voltage, the current, and the internal resistance of the battery 171 during heating. Temperature is the temperature of the battery 171 during heating. Remaining battery capacity is the remaining capacity of the battery 171 at the end of heating. Error code is identification information of an error that occurred during discharge.

An example of the discharge history information DB was described above.

The battery pack 170 adds the information obtained when heating was implemented to the discharge history information DB, as a new record. The battery pack 170 may update the discharge history information DB each time heating is implemented, or may update the discharge history information DB each time heating is implemented multiple times.

When over-discharge or abnormal heat generation, etc. has occurred, the battery pack 170 may store an error code indicating these errors. By referring to the error code when a battery pack 170 has been connected, the inhalation device 100 or the charging station 300 can easily determine whether this battery pack 170 is usable.

Moreover, it is conceivable that the battery pack 170 will be connected to an inhalation device 100 manufactured by the same manufacturer as the battery pack 170, but it is equally possible that the battery pack 170 will be connected to an inhalation device 100 manufactured by another company. Furthermore, it is conceivable that the battery pack 170 will be used in an inhalation device 100, but the battery pack 170 may equally be used in another electronic device such as a smartphone. In these cases, it might not be possible to acquire data from some fields (i.e., items) in the discharge history information DB. Fields that could not be acquired may be left blank. Moreover, it is possible to determine whether the battery pack 170 was connected to an inhalation device 100 manufactured by another company, and whether the battery pack 170 was used in another electronic device, according to whether or not there is a device type, whether or not there is a start time, or whether or not there is an end time.

An example of the charging history information DB is shown in Table 2 below.

**[Table 2]**

| Table 2. Example of charging history information DB | | | | | | |
|---|---|---|---|---|---|---|
| Data ID | Battery pack ID | Time of charging | Capacity before charging | Capacity after charging | Temperature | Charging station ID |
| XXX | XXX | YY/MM/DD | X[mAh] | X [mAh] | X[°C] | XXX |
| | | HH:MM:TT | | | | |
| YYY | YYY | YY/MM/DD | Y[mAh] | Y[mAh] | Y[°C] | YYY |
| | | HH:MM:TT | | | | |
| ... | ... | ... | ... | ... | ... | ... |

Time of charging is the date and time at which charging was performed. Capacity before charging is the remaining capacity of the battery 171 before the start of charging. Capacity after charging is the remaining capacity of the battery 171 at the end of charging. Temperature is the temperature of the battery 171 during charging. Charging station ID is identification information of the charging station 300 which charged the battery pack 170.

An example of the charging history information DB was described above.

The battery pack 170 adds the information obtained when charging was implemented to the charging history information DB, as a new record.

When the battery pack 170 is connected to an external device such as the inhalation device 100 or the charging station 300, the battery pack 170 sends the information stored in these DB to the external device. Additionally, the battery pack 170 may also send the various types of information stored in the memory 174 to the external device.

### (2) Processing for operation of charging station 300.

The charging station 300 charges the battery pack 170 when the battery pack 170 has been connected thereto. Furthermore, the charging station 300 creates a charging station operating history DB which stores information indicating an operating history of the charging station 300.

An example of the charging station operating history DB is shown in Table 3 below.

**[Table 3]**

| Table 3. Example of charging station operating history DB | | | | | | | | | |
|---|---|---|---|---|---|---|---|---|---|
| Data ID | Charging station ID | Charging start time | Charging end time | Store of installation information | Charging point information | Battery pack ID | Charging capacity | Charging temperature | Error code |
| XXX | XXX | YY/MM/DD | YY/MM/DD | XXX | Right column, first level | XXX | X[mAh] | X[°C] | - |
| | | HH:MM:TT | HH:MM:TT | | | | | | |
| YYY | YYY | YY/MM/DD | YY/MM/DD | YYY | Right column, second level | YYY | Y[mAh] | Y[°C] | EEEE |
| | | HH:MM:TT | HH: MM: TT | | | | | | |
| ... | ... | ... | ... | ... | ... | ... | ... | ... | . |

Charging start time is the time at which charging of the battery pack 170 started. Charging end time is the time at which charging of the battery pack 170 ended. Store of installation information is identification information of the sales outlet 8 where the charging station 300 is installed. Charging point information is identification information of the charging point in which the battery pack 170 was charged, with the position of the charging point in the charging station 300 being used, for example. Charged capacity is the remaining capacity of the battery 171 increased as a result of charging. Charging temperature is the temperature of the charging station 300 during charging. Error code is identification information of an error that occurred during charging.

An example of the charging station operating history DB was described above.

The charging station 300 adds the information obtained each time charging was performed to the charging station operating history DB as a new record.

The charging station 300 then sends to the management server 500 the information stored in the charging station operating history DB. Furthermore, the charging station 300 sends to the management server 500 information received from the battery pack 170 when connected to the battery pack 170.

### (3) Processing for operation of management server 500

The management server 500 creates a DB which stores information indicating the state of each device included in the system 1. The DB created by the management server 500 includes at least either one of a battery pack management DB which stores information indicating the state of the battery pack 170, and a charging station management DB which stores information indicating the state of the charging station 300.

An example of the battery pack management DB is shown in Table 4 below.

**[Table 4]**

| Table 4. Example of battery pack management DB | | | | | | | |
|---|---|---|---|---|---|---|---|
| Battery pack ID | Specification information | Most recent charging time | Number of times of charging | S O H | Deterioration determination | Fault determination | Availability |
| XXX | XXX | 10/3/2023 | 20 times | 48% | Yes | No | Out of order |
| | | HH:MM:TT | | | | | |
| YYY | YYY | 10/1/2023 | 10 times | 60% | No | No | In use |
| | | HH:MM:TT | | | | | |
| ZZZ | ZZZ | 10/2/2023 | 5 times | 90% | No | No | Charging |
| | | HH:MM:TT | | | | | |
| WWW | WWW | 9/28/2023 | 8 times | 80% | No | No | Available |
| | | HH: MM : TT | | | | | |
| ... | ... | ... | ... | ... | ... | ... | ... |

Specification information is information indicating the specification of the battery pack 170. Most recent charging time is the time at which the battery pack 170 was last charged. Number of times of charging is the number of times that the battery pack 170 has been charged. Deterioration determination is information indicating whether or not it has been determined that the battery pack 170 has deteriorated. Fault determination is information indicating whether or not it has been determined that the battery pack 170 is faulty. Availability is information indicating availability of the battery pack 170, indicating the four situations of "in use", "charging", "available", and "out of order", for example. "In use" is a state where the battery pack 170 has been provided to an inhalation device 100. "Charging" is a state where the battery pack 170 has been returned and is being charged by the charging station 300. "Available" is a state where the battery pack 170 is accommodated in a state of full charge in the charging station 300. "Out of order" is a state where provision of the battery pack 170 is prohibited.

An example of the battery pack management DB was described above.

The management server 500 updates the records corresponding to the battery pack 170 each time information relating to that battery pack 170 is acquired.

The management server 500 is capable of ascertaining states of battery packs 170 currently in circulation by means of the battery pack management DB. As a result, the management server 500 can recover faulty battery packs 170, and prioritize circulation of models of battery packs 170 or battery packs 170 from manufacturers with a low failure rate.

An example of the charging station management DB is shown in Table 5 below.

**[Table 5]**

| Table 5. Example of charging station management DB | | | | | |
|---|---|---|---|---|---|
| Charging station ID | Specification information | Store of installation information | Charging point information | Number of times of use | Availability |
| XXX | XXX | XXX | Right column, first level | 20 | In use |
| XXX | XXX | XXX | Right column, second level | 10 | In use |
| XXX | XXX | XXX | Left column, first level | 5 | Out of order |
| XXX | XXX | XXX | Left column, second level | 6 | Vacant |
| YYY | YYY | YYY | Right column, first level | 11 | In use |
| ... | ... | ... | ... | ... | . .. |

Specification information is information indicating the specification of the charging station 300. Number of times of use is the number of times that charging was performed using each charging point. Availability is information indicating availability of each charging point in the charging station 300, indicating the three situations of "available", "vacant", and "out of order". "In use" is a state where the charging point is in use, that is, a battery pack 170 is accommodated in the charging point. "Vacant" is a state where the charging point is not being used. "Out of order" is a state where usage of the charging point is prohibited.

An example of the charging station management DB was described above.

The management server 500 updates the records corresponding to the charging station 300 each time information relating to that charging station 300 is acquired.

The management server 500 is capable of ascertaining the state of the charging station 300 by means of the charging station management DB. As a result, the management server 500 can control the charging station 300 so that charging points which have been used a fewer number of times are preferentially used, and can arrange repairs for charging points which are out of order.

The management server 500 may also create a DB of and manage information stored in the memory 174 of the battery pack 170 and collected via the charging station 300, in addition to the information illustrated in the battery pack management DB and the charging station management DB. This makes it possible to ascertain the mode of use of the battery pack 170 by the user, for example.

### (4) Processing flow

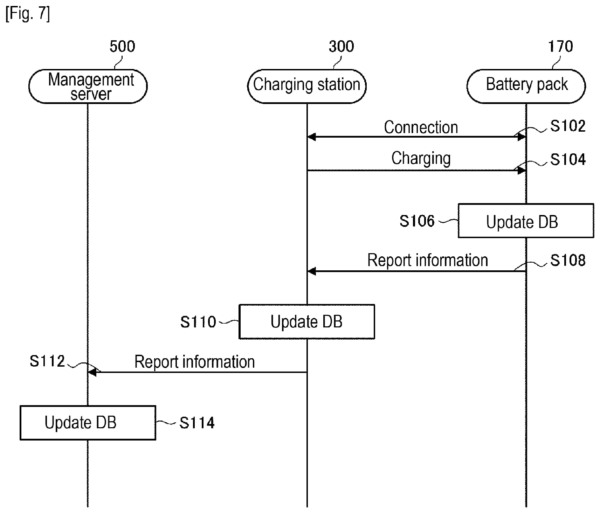

Fig. 7 is a sequence chart showing an example of a processing flow implemented by the system 1 according to this embodiment. This sequence involves the battery pack 170, the charging station 300, and the management server 500.

As shown in fig. 7, when the battery pack 170 and the charging station 300 are first of all connected (step S102), the charging station 300 charges the battery pack 170 (step S104).

Next, the battery pack 170 updates the DB (step S106). For example, the battery pack 170 adds a record relating to the charging implemented in step S104 to the charging history information DB.

Next, the battery pack 170 reports information to the charging station 300 (step S108). For example, the battery pack 170 sends information relating to records in the discharge history information DB and the charging history information DB, and sends other items of information stored in the memory 174, which were described above.

The charging station 300 then updates the DB (step S110). For example, the charging station 300 adds a record to the charging station operating history DB based on information relating to the charging implemented in step S104, and the information received in step S108.

Next, the charging station 300 reports information to the management server 500 (step S112). For example, the charging station 300 sends information relating to records in the charging station operating history DB, and sends information received from the battery pack 170.

The management server 500 then updates the DB (step S114). For example, the management server 500 updates the battery pack management DB and the charging station management DB based on the information received in step S112.

### <5. Determination of state of battery pack 170>

The charging station 300 may determine the state of the battery pack 170 connected to the charging station 300. More specifically, the charging station 300 may determine the state of the battery pack 170 based on information acquired, via the connection terminal 351, from the battery pack 170 connected to the connection terminal 351. This configuration makes it possible to ascertain the state of the battery pack 170 each time the battery pack 170 is replaced. As a result, unsuitable battery packs 170 can be recovered at an early stage so that suitable battery packs 170 are always in circulation. The battery packs 170 can thus be suitably managed.

The charging station 300 may determine, as the state of the battery pack 170, whether or not the battery pack 170 has deteriorated. For example, when the SOH of the battery 171 is below a predetermined threshold (e.g., 50%), the charging station 300 may determine that the battery pack 170 has deteriorated, and may otherwise determine that the battery pack 170 has not deteriorated.

When it has been determined that the battery pack 170 has deteriorated, the charging station 300 controls processing to notify information indicating that the battery pack 170 has deteriorated, in association with the relevant battery pack 170.

As an example, the charging station 300 may cause light emission in a predetermined form by the LED 302 associated with the accommodating case 301 accommodating the battery pack 170 which is judged to have deteriorated. This configuration makes it possible to prevent the staff S from providing a deteriorated battery pack 170, and to prompt recovery thereof.

As another example, the charging station 300 may send information indicating that the battery pack 170 has deteriorated to the management server 500. By virtue of this configuration, the management server 500 can update the deterioration determination field in the battery pack management DB, and use this to ascertain whether or not the battery pack 170 has deteriorated.

The charging station 300 may determine the state of the battery pack 170 based on information indicating the operating history of the battery pack 170 stored in the memory 174 of the battery pack 170. As an example, the charging station 300 may estimate the SOH of the battery 171 based on information in the discharge history information DB or the charging history information DB, and determine deterioration of the battery pack 170 based on the estimated SOH. As another example, the charging station 300 may determine deterioration of the battery pack 170 based on the mode of use, such as the number of times of heating (i.e., the number of records) and heating intervals (i.e., average value of intervals from end time to start time) determined from the discharge history information DB. As another example, the charging station 300 may determine deterioration of the battery pack 170 based on other heating-related discharge information stored in the memory 174.

The charging station 300 may determine the state of the battery pack 170 based on the specification information of the battery pack 170 stored in the memory 174 of the battery pack 170. As an example, the charging station 300 may determine deterioration of the battery pack 170 based on a difference between the initial capacity of the battery 171 in the specification information and the capacity after charging in the charging history information DB.

Alternatively, the charging station 300 may determine the state of the battery pack 170 by referring to information stored in the management server 500.

The charging station 300 may determine a fault in the battery pack 170 as the state of the battery pack 170. For example, the charging station 300 may determine a fault in the battery pack 170 according to whether or not there is an error code in the discharge history information DB.

When it has been determined that the battery pack 170 is faulty, the charging station 300 controls processing to notify information indicating that the battery pack 170 is faulty, in association with the relevant battery pack 170.

As an example, the charging station 300 may cause light emission in a predetermined form by the LED 302 associated with the accommodating case 301 accommodating the battery pack 170 which is judged to be faulty. This configuration makes it possible to prevent the staff S from providing a faulty battery pack 170, and to prompt recovery thereof.

As another example, the charging station 300 may send information indicating that the battery pack 170 is faulty to the management server 500. By virtue of this configuration, the management server 500 can update the fault determination field in the battery pack management DB, and use this to ascertain whether or not the battery pack 170 is faulty.

The charging station 300 may determine a charging abnormality in the battery pack 170 as the state of the battery pack 170. There are three types of charging abnormalities: abnormalities in the charging station 300 (e.g., abnormal heat generation, etc.), abnormalities in the battery pack 170 (e.g., short-circuit or abnormal heat generation, etc.), and other abnormalities (e.g., detachment of connection, etc.). When a charging abnormality has occurred, the charging station 300 stores the error code indicating the type of charging abnormality that occurred, in the charging station operating history DB.

When it has been determined that a charging abnormality has occurred, the charging station 300 controls processing to notify information indicating that the charging abnormality has occurred, in association with the battery pack 170 in which the charging abnormality occurred.

As an example, the charging station 300 may cause light emission in a form commensurate with the type of charging abnormality that has occurred by the LED 302 associated with the accommodating case 301 accommodating the battery pack 170 in which a charging abnormality is judged to have occurred. This configuration makes it possible to prompt the staff S to avoid providing a battery pack 170 in which a charging abnormality has occurred. Furthermore, the staff S can be prompted to resolve the charging abnormality, for instance by removing a battery pack 170 in which a charging abnormality has occurred, reconnecting a battery pack 170 which has become detached from the connection terminal 351, or repairing a charging point in which an abnormality has occurred. Moreover, the staff S may replace a charging station 300 in which an abnormality has occurred with a new charging station 300.

Notification of a charging abnormality is preferably maintained until the charging abnormality has been resolved. Resolution of the charging abnormality can be prompted by this means. Furthermore, for abnormalities in the charging station 300, a prompt can be given to avoid using a charging point in which a charging abnormality has occurred.

Notification of a charging abnormality may be stopped when the abnormality has been resolved. Alternatively, notification of a charging abnormality may be stopped on the basis of an action performed by the staff S. This makes it possible to prompt resumption of use of a charging point in which the abnormality has been resolved.

As another example, the charging station 300 may send information indicating that a charging abnormality has occurred in the battery pack 170 to the management server 500. By virtue of this configuration, the management server 500 can update the fault determination field in the battery pack management DB, and use this to ascertain whether or not the battery pack 170 is faulty. Furthermore, the management server 500 can set the availability in the charging station management DB to "out of order", and use this to ascertain that a charging point in which a charging abnormality has occurred is unavailable.

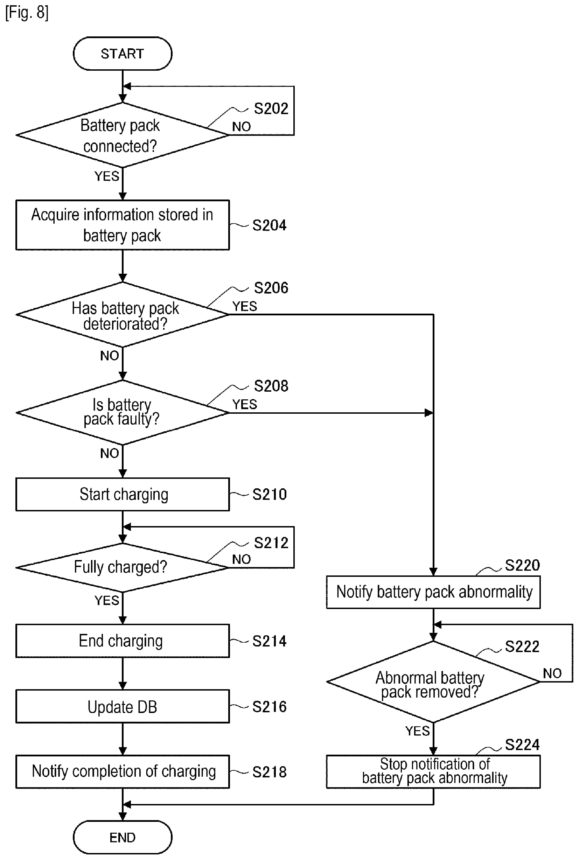

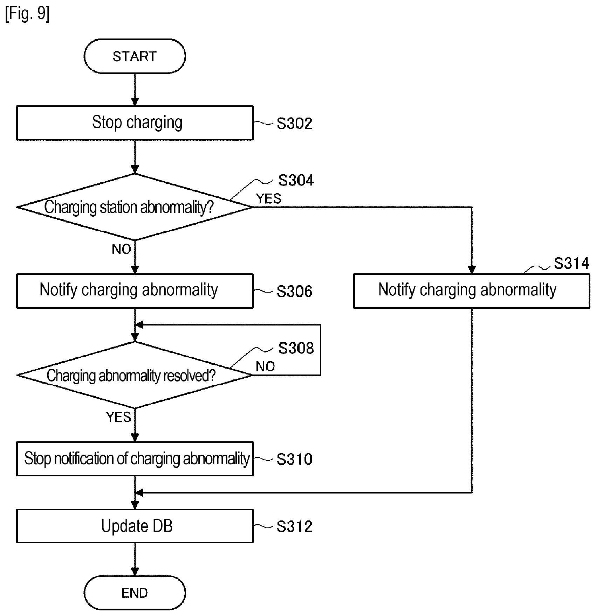

Examples of processing flows relating to determining the state of the battery pack 170 will be described below with reference to fig. 8 and 9.

Fig. 8 is a flowchart showing an example of a processing flow implemented by the charging station 300 according to this embodiment.

As shown in fig. 8, the charging station 300 first of all determines whether or not the battery pack 170 has been connected (step S202).

When it has been determined that the battery pack 170 is not connected (step S202: NO), the charging station 300 stands by until the battery pack 170 is connected.

When it has been determined that the battery pack 170 is connected (step S202: YES), the charging station 300 acquires the information stored in the battery pack 170 (step S204). More specifically, the charging station 300 receives, via the connection terminal 351, the information stored in the memory 174 of the battery pack 170.

Next, the charging station 300 determines whether or not the battery pack 170 has deteriorated (step S206).

When it has been determined that the battery pack 170 has not deteriorated (step S206: NO), the charging station 300 determines whether or not the battery pack 170 is faulty (step S208).

When it has been determined that the battery pack 170 is not faulty (step S208: NO), the charging station 300 starts charging of the battery pack 170 (step S210).

The charging station 300 continues charging until the battery pack 170 is fully charged (step S212: NO).

When the battery pack 170 is fully charged (step S212: YES), the charging station 300 then ends charging (step S214).

Next, the charging station 300 updates the charging station operating history DB (step S216).

The charging station 300 then notifies completion of charging (step S218).

Meanwhile, when it has been determined that the battery pack 170 has deteriorated or is faulty (step S206: YES, or step S208: YES), the charging station 300 notifies an abnormality in the battery pack 170 (step S220).

The charging station 300 continues notification of the abnormality in the battery pack 170 until the abnormal battery pack 170 is removed (step S222: NO).

When the abnormal battery pack 170 has been removed (step S222: YES), the charging station 300 then stops notification of the abnormality in the battery pack 170 (step S224).

The processing ends after this.

An example of the processing flow when an abnormality has occurred during charging in abovementioned steps S210-S214 will be described next with reference to fig. 9.

Fig. 9 is a flowchart showing an example of a processing flow implemented by the charging station 300 according to this embodiment.

As shown in fig. 9, when an abnormality has occurred, the charging station 300 first of all stops charging (step S302).

Next, the charging station 300 determines whether or not the abnormality that has occurred is an abnormality in the charging station 300 (step S304).

When it has been determined that the abnormality that has occurred is not an abnormality in the charging station 300 (step S304: NO), the charging station 300 notifies a charging abnormality (step S306).

The charging station 300 continues notification of the charging abnormality until the charging abnormality is resolved (step S308: NO). It should be noted that charging abnormalities other than abnormalities in the charging station 300 can be resolved, for instance by removing the battery pack 170 or reconnecting the battery pack 170.

Meanwhile, when the charging abnormality has been resolved (step S308: YES), the charging station 300 stops notification of the charging abnormality (step S310).

After this, the charging station 300 updates the battery station operating history DB (step S312). For example, the charging station 300 adds a record including the error code corresponding to the charging abnormality that has occurred, to the battery station operating history DB.

Meanwhile, when it has been determined that the abnormality that has occurred is an abnormality in the charging station 300 (step S304: YES), the charging station 300 notifies a charging abnormality (step S314). The processing advances to step S312 after this.

The processing ends after this.

### <6. Supplementary Information>

Preferred embodiments of the present disclosure were described in detail above with reference to the appended drawings, but the present disclosure is not limited to such examples. It is obvious that a person having ordinary knowledge in the technical field to which the present disclosure belongs will be able to conceive of a number of variant examples or modified examples within the scope of the technical concept disclosed in the claims, and any such variant examples or modified examples are naturally understood to fall within the technical scope of the present disclosure.

The LED 302 described in the embodiments above is an example of the output unit 340 which outputs information indicating the state of the battery pack 170 as determined by the charging station 300. Alternatively, the state of the battery pack 170 may be displayed on the touch panel 303 or output by sound. Alternatively, the staff S may be notified of the state of the battery pack 170 by locking the accommodating case 301 which accommodates a deteriorated or faulty battery pack 170 to ensure that the battery pack 170 is not removed.

The embodiments above described an example in which the charging station 300 relays communication between the battery pack 170 and the management server 500, but the present disclosure is not limited to such an example. As an example, the charging station 300 may relay communication between the user terminal 200 and the management server 500. In that case, the user terminal 200 may send information stored in the user terminal 200 to the management server 500 via the charging station 300. Alternatively, the user terminal 200 may send information received from the battery pack 170 via the inhalation device 100, to the management server 500 via the charging station 300.

The management server 500 may manage the firmware of the inhalation device 100 on the basis of information collected via the battery pack 170. For example, the battery pack 170 acquires the FWID and the device ID of the inhalation device 100 when the inhalation device 100 is connected. The battery pack 170 then sends the acquired FWID and device ID of the inhalation device 100 to the charging station 300 when the battery pack 170 is connected to the charging station 300. Meanwhile, the management server 500 collects the FWID and the device ID of the inhalation device 100 via the charging station 300. If the collected FWID does not match the most recent FWID, the management server 500 then sends a notification prompting a firmware update to the user terminal 200 of the user U identified from the device ID.

The inhalation device 100 may receive specification information of the battery pack 170 from the battery pack 170, and update operating parameters of the inhalation device 100. As an example, the inhalation device 100 may update display settings for information indicating a charging status, based on the maximum charging voltage and charging rate of the battery 171, which are included in the specification information of the battery pack 170. The operating parameters based on specification information of the battery pack 170 may be updated in this way when the inhalation device 100 and the battery pack 170 are connected, or may be updated when the firmware of the inhalation device 100 is updated. This configuration can make the battery pack 170 compatible with multiple types of inhalation devices 100, and can make the inhalation device 100 compatible with new models of battery packs 170.

The embodiments above described an example in which the charging station 300 is operated by the staff S, but the present disclosure is not limited to such an example. The charging station 300 may equally be operated by self-service by the user U. That is to say, the staff S need not be involved in replacing battery packs 170.

The embodiments above described an example in which the system 1 includes the sales outlet terminal 400. As an example, the functions of the sales outlet terminal 400 may be included in the user terminal 200. In that case, payments for replacement of a battery pack 170 may be settled by electronic payment using the user terminal 200. As another example, the functions of the sales outlet terminal 400 may be included in the charging station 300.

The embodiments above described a service for replacement of the battery pack 170 which functions as the power source unit 111 of the inhalation device 100, but the scope of the replacement service is not limited to such an example. The power source unit 111 of the inhalation device 100 may be charged by a portable charger with a built-in battery, which is configured to be detachable from the inhalation device 100. The replacement service may then be provided for the portable charger, and the technology relating to the present disclosure may be applied with the portable charger understood as the battery pack of the present disclosure. For example, the charging station 300 may determine the state of the portable charger when that portable charger is connected, and may notify information indicating the state that has been determined.

The processing operations described in the embodiments above may be implemented with any device serving as the main agent. For example, the embodiments above described the charging station 300 determining the state of the battery pack 170, but the processing to determine the state of the battery pack 170 may equally be implemented by the management server 500.

It should be noted that the series of processes performed by each device described in the present description may be realized by using software, hardware, or any combination of software and hardware. Programs constituting the software are prestored on a recording medium (more specifically, a non-transitory computer-readable storage medium) provided internally or externally to each device, for example. When the programs are then executed, for example, by a computer for controlling each device described in the present description, the programs are read into a random access memory (RAM) and executed by means of a processing circuit such as a central processing unit (CPU). The recording medium is, for example, a magnetic disk, an optical disk, a magneto-optical disk, or a flash memory, etc. Furthermore, the computer programs may be distributed via a network, for example, without the use of a recording medium. Furthermore, the computer may be an application-specific integrated circuit (ASIC), a general-purpose processor which executes functions by reading software programs, or a computer on a server used for cloud computing, etc. Furthermore, the series of processes performed by each device described in the present description may be processed centrally by a single computer, or may be processed in a distributed manner by multiple computers. In addition, in the embodiments described above, two or more communication means present in a single device may be physically realized by a single medium.

Furthermore, the processing described using flowcharts or sequence diagrams in the present description need not necessarily be implemented in the order depicted. Some processing steps may be implemented in parallel. Furthermore, additional processing steps may be employed and some processing steps may be omitted.

The following configurations also fall within the technical scope of the present disclosure.
(1) A battery pack provision device for replaceably providing a battery pack to each of a plurality of inhalation devices having a heating unit for heating an aerosol source to generate an aerosol, a battery pack being detachably connected to each inhalation device, and the battery pack provision device comprising:
   a connecting portion electrically connected to the battery pack; and
   a control unit for determining a state of the battery pack based on information acquired, via the connecting portion, from the battery pack connected to the connecting portion,
   wherein
   when it has been determined that the battery pack has deteriorated, the control unit controls processing to notify information indicating that the battery pack has deteriorated, in association with the battery pack.
(2) The battery pack provision device as disclosed (1) above, wherein
   the battery pack comprises a memory unit for storing information indicating an operating history of the battery pack, and
   the control unit determines the state of the battery pack based on the information indicating the operating history of the battery pack stored in the memory unit of the battery pack.
(3) The battery pack provision device as disclosed (2) above, wherein
   the information indicating the operating history of the battery pack comprises at least either one of information indicating a discharge history of the battery pack and information indicating a charging history of the battery pack.
(4) The battery pack provision device as disclosed in any one of (1) to (3) above, wherein
   the memory unit of the battery pack stores specification information of the battery pack, and the control unit determines the state of the battery pack also based on the specification information of the battery pack stored in the memory unit of the battery pack.
(5) The battery pack provision device as disclosed in any one of (1) to (4) above, wherein
   when it has been determined that the battery pack is faulty, the control unit controls processing to notify information indicating that the battery pack is faulty, in association with the battery pack.
(6) The battery pack provision device as disclosed in any one of (1) to (5) above,
   further comprising a charging unit for charging the battery pack connected to the connecting portion.
(7) The battery pack provision device as disclosed in (6) above, wherein
   when a charging abnormality has occurred in the battery pack, the control unit controls processing to notify information indicating that a charging abnormality has occurred, in association with the battery pack.
(8) The battery pack provision device as disclosed in any one of (1) to (7) above,
   further comprising an output unit for outputting the information indicating the state of the battery pack determined by means of the control unit.
(9) The battery pack provision device as disclosed in any one of (1) to (8) above, comprising a plurality of connecting portions.
(10) A control method implemented by a processor for controlling a battery pack provision device for replaceably providing a battery pack to each of a plurality of inhalation devices having a heating unit for heating an aerosol source to generate an aerosol, a battery pack being detachably connected to each inhalation device, and the control method comprising:
   determining a state of the battery pack in the battery pack provision device based on information acquired, via a connecting portion electrically connected to the battery pack, from the battery pack connected to the connecting portion; and
   when it has been determined that the battery pack has deteriorated, controlling processing to notify information indicating that the battery pack has deteriorated, in association with the battery pack.
(11) A program for causing a computer that controls a battery pack provision device for replaceably providing a battery pack to each of a plurality of inhalation devices having a heating unit for heating an aerosol source to generate an aerosol, a battery pack being detachably connected to each inhalation device, to function as
   a control unit for determining a state of the battery pack in the battery pack provision device based on information acquired, via a connecting portion electrically connected to the battery pack, from the battery pack connected to the connecting portion,
   wherein
   when it has been determined that the battery pack has deteriorated, the control unit controls processing to notify information indicating that the battery pack has deteriorated, in association with the battery pack.

### REFERENCE SIGNS LIST

1 System
100 Inhalation device
110 Power supply unit
111 Power source unit
112 Sensor unit
113 Notification unit
114 Memory unit
115 Communication unit
116 Control unit
120 Cartridge
121 Heating unit
122 Liquid guiding portion
123 Liquid storage portion
124 Mouthpiece
130 Flavoring cartridge
131 Flavor source
140 Accommodating portion
141 Internal space
142 Opening
143 Bottom portion
144 Heat insulating portion
150 Stick-type substrate
151 Substrate portion
152 Mouthpiece portion
170 Battery pack
171 Battery
172 Protection IC
173 MCU
174 Memory
175 Sensor
176 Terminal
180 Air flow path
181 Air inflow hole
182 Air outflow hole
200 User terminal
300 Charging station
301 Accommodating case
302 LED
310 Communication unit
320 Memory unit
330 Input unit
340 Output unit
350 Charging unit
351 Connection terminal
360 Control unit
400 Sales outlet terminal
500 Management server
510 Communication unit
520 Memory unit
530 Control unit
8 Sales outlet
9 Network

## Claims

1. A battery pack provision device for replaceably providing a battery pack to each of a plurality of inhalation devices having a heating unit for heating an aerosol source to generate an aerosol, a battery pack being detachably connected to each inhalation device, and the battery pack provision device comprising:
a connecting portion electrically connected to the battery pack; and
a control unit for determining a state of the battery pack based on information acquired, via the connecting portion, from the battery pack connected to the connecting portion,
wherein
when it has been determined that the battery pack has deteriorated, the control unit controls processing to notify information indicating that the battery pack has deteriorated, in association with the battery pack.

2. The battery pack provision device as claimed in claim 1, wherein
the battery pack comprises a memory unit for storing information indicating an operating history of the battery pack, and
the control unit determines the state of the battery pack based on the information indicating the operating history of the battery pack stored in the memory unit of the battery pack.

3. The battery pack provision device as claimed in claim 2, wherein
the information indicating the operating history of the battery pack comprises at least either one of information indicating a discharge history of the battery pack and information indicating a charging history of the battery pack.

4. The battery pack provision device as claimed in any one of claims 1 to 3, wherein
the memory unit of the battery pack stores specification information of the battery pack, and the control unit determines the state of the battery pack also based on the specification information of the battery pack stored in the memory unit of the battery pack.

5. The battery pack provision device as claimed in any one of claims 1 to 4, wherein
when it has been determined that the battery pack is faulty, the control unit controls processing to notify information indicating that the battery pack is faulty, in association with the battery pack.

6. The battery pack provision device as claimed in any one of claims 1 to 5,
further comprising a charging unit for charging the battery pack connected to the connecting portion.

7. The battery pack provision device as claimed in claim 6, wherein
when a charging abnormality has occurred in the battery pack, the control unit controls processing to notify information indicating that a charging abnormality has occurred, in association with the battery pack.

8. The battery pack provision device as claimed in any one of claims 1 to 7,
further comprising an output unit for outputting the information indicating the state of the battery pack determined by means of the control unit.

9. The battery pack provision device as claimed in any one of claims 1 to 8,
comprising a plurality of connecting portions.

10. A control method implemented by a processor for controlling a battery pack provision device for replaceably providing a battery pack to each of a plurality of inhalation devices having a heating unit for heating an aerosol source to generate an aerosol, a battery pack being detachably connected to each inhalation device, and the control method comprising:
determining a state of the battery pack in the battery pack provision device based on information acquired, via a connecting portion electrically connected to the battery pack, from the battery pack connected to the connecting portion; and
when it has been determined that the battery pack has deteriorated, controlling processing to notify information indicating that the battery pack has deteriorated, in association with the battery pack.

11. A program for causing a computer that controls a battery pack provision device for replaceably providing a battery pack to each of a plurality of inhalation devices having a heating unit for heating an aerosol source to generate an aerosol, a battery pack being detachably connected to each inhalation device, to function as
a control unit for determining a state of the battery pack in the battery pack provision device based on information acquired, via a connecting portion electrically connected to the battery pack, from the battery pack connected to the connecting portion,
wherein
when it has been determined that the battery pack has deteriorated, the control unit controls processing to notify information indicating that the battery pack has deteriorated, in association with the battery pack.
